# EUROPÄISCHE PATENTANMELDUNG

(11) **EP 2 258 582 A2**
(43) Veröffentlichungstag der Anmeldung: **08.12.2010**
(21) Anmeldenummer: 10157691.6
(22) Anmeldetag: 25.03.2010
(51) Int. Cl.: B60L 11/18

(54) **System und Verfahren zum Aufladen von Elektrofahrzeugen**

(30) Priorität: 25.03.2009 DE 102009014295
(71) Anmelder: Stadtwerke Mainz AG, 55118 Mainz (DE)
(72) Erfinder: Flohr, Peter, 55128 Main (DE); Schmidt, Jürgen, 55599 Wonheim (DE)
(74) Vertreter: Graf Glück Habersack Kritzenberger

(57) **Zusammenfassung**

Die Erfindung betrifft ein System zum Aufladen von Elektrofahrzeugen, umfassend wenigstens eine Ladestation (10) mit einer Stromwandlereinrichtung (48), die Strom aus dem öffentlichen Netz in einen für das fragliche Elektrofahrzeug passenden Gleich- oder Wechselstrom passender Größe konvertiert, welche Stromwandlereinrichtung mit einer Steuerung (50) verbunden ist, welche Informationen von einer Eingabevorrichtung (20, 22, 23, 24) erhält, welche Steuerung eine Vergleichseinrichtung aufweist zum Vergleichen der über die Eingabeeinrichtung eingelesenen Identifizierungsdaten mit in einem Speicher und/oder Server abgelegten Daten, und in Abhängigkeit von dem Vergleichsergebnis die Ladestation freigebbar und die Stromwandlereinrichtung steuerbar ist. Auf diese Weise ist ein diskriminierungsfreier Strombezug von mehreren Stromanbietern an einer Ladestation auf einfache Weise möglich.

## Beschreibung

Die vorliegende Erfindung betrifft ein System zum Aufladen von Elektrofahrzeugen.

Es gibt derzeit auf dem deutschen Markt eine Reihe von Pilotprojekten zum Aufladen von Elektrofahrzeugen, die in ähnlicher Weise wie Tankstellen funktionieren. Die unterschiedlichen Pilotprojekte werden hierbei durchgeführt von Konsortien, in denen ein definierter Stromanbieter mit bestimmten Fahrzeugherstellern kooperiert. Übergeordnet besteht der politische Anspruch, die zukünftige Versorgung der Elektromobilität überwiegend bis ausschließlich mit regenerativen Energien zu bewerkstelligen. Während diese Pilotprojekte in der Testphase durchaus funktionieren, ist die Serienreife derartiger Aufladestationen mit Schwierigkeiten verbunden.

Zum einen muss durch EG-Antidiskriminierungsrichtlinien sichergestellt sein, dass an Aufladestationen der Strom von unterschiedlichen Anbietern bezogen werden kann. Zum anderen haben die unterschiedlichen Pilotprojekte unterschiedliche Anforderungen an die Stromanschlüsse und die Art, auf welcher der Strom zur Verfügung gestellt wird, d.h. als Gleichstrom, Drehstrom, gepulst oder kontinuierlich. Dabei ist eine eichrechtlich einwandfreie Ermittlung der abgegebenen Energiemengen zu gewährleisten.

Darüber hinaus sind sämtliche technischen, betrieblichen und Sicherheitsbelange für diese zur Bedienung durch Laien vorgesehenen Anlagen zu erfüllen. Von dem Ladesystem und seiner Verwendung darf keine unzulässige Beeinträchtigung auf die Verkehrssicherheit, die Umwelt, das vorgelagerte öffentliche Netz, die nutzerseitigen Betriebsmittel (Fahrzeuge) sowie unzulässige Auswirkungen auf Dritte ausgehen. Auftretende Fehler sollen dabei die Verwendbarkeit so wenig als möglich beeinträchtigen bzw. soll nach Wegfall des Fehlers eine möglichst schnelle Rückkehr zum Normalbetrieb erfolgen.

Vor diesem Hintergrund ist es Aufgabe der Erfindung, ein System zum Aufladen von Elektrofahrzeugen zu schaffen, welches das Aufladen unterschiedlicher Elektrofahrzeuge mit Strom von unterschiedlichen Anbietern ermöglicht. Dieses System soll außerdem in der Lage sein, in den angeschlossenen Fahrzeugen bereits gespeicherte Energie auf Anforderung in das öffentliche Netz zurückzuspeisen, im Sinne eines Puffers.

Diese Aufgabe wird durch ein System gemäß Anspruch 1 gelöst. Vorteilhafte Weiterbildungen der Erfindung sind Gegenstand der zugehörigen Unteransprüche.

Das System zum Aufladen von Elektrofahrzeugen umfasst wenigstens eine Ladestation, vorzugsweise mehrere Ladestationen, ähnlich den Tanksäulen einer Tankstelle. Jeder Ladestation ist eine Stromwandlereinrichtung zugeordnet, die in der Lage ist, den Strom aus dem öffentlichen Netz in einen für das fragliche Elektrofahrzeug passenden Gleich- oder Wechselstrom oder pulsierten Strom umzuwandeln. Eine derartige Stromwandlereinrichtung ist vorzugsweise in Art eines Frequenzwandlers mit Gleichstromzwischenkreis vorgesehen, durch welchen es möglich ist, Gleich- und Wechselstrom oder pulsierten Gleichstrom mit beliebiger Frequenz zu erzeugen. Die Stromwandlereinrichtung ist hierbei mit einer Steuerung verbunden, welche Informationen aus einer Eingabevorrichtung an der Ladestation erhält. Die Steuerung kann hierbei eine im System vorgesehene zentrale Steuerung sein oder in dezentraler Weise vorgesehen, so dass jede Ladestation über eine eigene Steuerung verfügt. Die Stromwandlereinrichtung kann dezentral an jeder Ladestation vorgesehen sein oder in Verbindung mit der zentralen Steuerung angeordnet sein. Als Fahrzeug im Sinne dieser Anmeldung wird jede Art von Wasser-, Luft- oder Landfahrzeug betrachtet.

Die Eingabevorrichtung ist eine herkömmliche Eingabevorrichtung wie z.B. eine Tastatur, Touchscreen, ein Datenträgerleser, z.B. Kartenleser oder ein Scanner zur Erfassung eines Fingerabdrucks oder der Iris. Über eine derartige Eingabevorrichtung wird eine Kundenkennung eingelesen, welche Kundenkennung von der Steuerung in einer Vergleichseinrichtung mit gespeicherten Kundendaten verglichen wird. Dieser Vergleichsspeicher mit den Kundendaten kann sich im System befinden oder in einer zentralen Datensammelstation, wie z.B. einem Server, der über Internet oder ein anderes Netzwerk mit dem System verbunden ist. Nach dem Vergleich der Identifizierungsdaten mit den im Speicher oder Server abgelegten Kundendaten wird ein Vergleichsergebnis erhalten, in Abhängigkeit dessen, die Ladestation zum Beladen des Elektrofahrzeugs freigegeben oder gesperrt wird. Weiterhin wird vorzugsweise automatisch die Stromwandlereinrichtung derart angesteuert, dass der Strom in einer für das fragliche Elektrofahrzeug richtigen Form abgegeben wird. Die Steuerung weist ferner eine Verrechnungseinheit auf, welche die entnommene Strommenge einem den Kundendaten zugeordneten Kundenkonto zuschreibt.

Hierfür ist vorzugsweise die Ladestation oder die Steuerung mit einem Speicher für die getätigten Stromdurchsätze und zugehörigen Kontodaten verbunden ist.

Auf diese Weise kann die Verrechnung über den Anbieter des Stroms erfolgen oder bar dem Kunden in Rechnung gestellt werden, wie bei einer Tankstelle. Durch die automatische Ansteuerung der Stromwandlereinrichtung mittels der Identifizierungsdaten des Kunden oder manueller Eingabedaten wird automatisch eine richtige zur Signalform oder Impulsform des zur Verfügung gestellten Stroms bewirkt, so dass eine falsche Bereitstellung des Stroms für das Elektrofahrzeug ausgeschlossen ist.

Umgekehrt ist die Steuerung vorzugsweise in der Lage, bei vorliegender Netzanforderung entsprechend dem identifizierten Elektrofahrzeug die dort gespeicherte Elektroenergie in vereinbartem Umfang so umzurichten, dass sie vom Netz aufgenommen werden kann. Vorzugsweise enthält daher das System eine mit der Steuerung verbundenen Verrechnungseinheit, welche die entnommene Strommenge eine den Kundendaten zugeordnetem Kundenkonto zuschreibt und zurückgespeiste Energie dorthin vergütet. Der hieraus entstehende Vergütungsanspruch wird entsprechend der Kundendaten ebenfalls von der Verrechnungseinheit unabhängig verwaltet.

Damit der Kunde die Möglichkeit hat, den Anbieter auch unabhängig von voreingestellten ID-Daten z.B. einer Tank- oder EC-Karte auszuwählen, welche durch die Eingabevorrichtung gelesen wird, hat die Ladestation (10) vorzugsweise eine zweite Eingabevorrichtung (22), mittels der ein Stromanbieter für den Bezug des Ladestroms eingebbar ist. Daraufhin wird in Abhängigkeit von den über die zweite Eingabevorrichtung eingegebenen Anbieterdaten ein dem Ladestrom entsprechender Wert in einem anbieterspezifischen Speicherbereich der Steuerung/des Servers abgelegt, der separate Speicherbereiche für unterschiedliche Anbieter aufweist. Der auf diesen Speicherplätzen abgelegte Wert wird dann in Kommunikation mit den Anbietern zur Verrechnung verwendet. Diese Technologie verbessert in sehr starkem Maße die Umsetzung der Idee des diskriminierungsfreien Strombezugs.

Vorteilhafterweise wird der Strom von der Ladestation zu einem Fahrzeug mittels einer in Verbindung mit der Ladestation ausgebildeten Induktionseinrichtung übertragen, die mit einer komplementären Induktionseinrichtung an dem Fahrzeug zur Übertragung des Ladestroms zusammenwirkt. Die Übertragung erfolgt somit kontaktlos, was Kontaktprobleme mit im Außenbereich angeordneten elektrischen Kontakten vermeidet und was zum anderen Kompatibilitätsprobleme zwischen verschiednen Steckertypen einer kontaktbasierten Stromübertragung vermeidet. Zudem wird durch die Induktionsübertragung des Ladestroms vermieden, dass Ladestecker-Kompatibilitätsprobleme auftreten, die einer diskriminierungsfreien Stromlieferung entgegenstehen und zur Bevorzugung bestimmter Anbieter genutzt werden könnten.

Vorzugsweise sind die Induktionseinrichtung und die komplementäre Induktionseinrichtung zur bidirektionalen Datenübertragung ausgebildet. Dann hat das Fahrzeug vorzugsweise einen Speicher für Identifikationsdaten und einen Modulator, um der fahrzeugseitigen komplementären Induktionseinrichtung ein die Identifikationsdaten enthaltendes Datensignal zuzuführen, und die Ladestation enthält einen mit der Induktionseinrichtung verbundenen Demodulator zum Ausfiltern des Datensignals aus dem mittels der Induktionseinrichtung von der komplementären Induktionseinrichtung erhaltenen Signals. In diesem Fall bildet der Demodulator die Eingabevorrichtung für die Identifikationsdaten. Diese Ausbildungsform der Erfindung ist besonders vorteilhaft, weil sie es gestattet, mit der Induktionseinrichtung nicht nur den Ladestrom sondern auch die Identifikationsdaten zu übertragen, wodurch der gesamte Ladevorgang automatisch ablaufen kann, ohne dass der Fahrzeughalter aktiv irgendetwas unternehmen muss.

Vorzugsweise hat die Ladestation auch einen Modulator, der z.B. mit dem Demodulator in einem Gerät integriert sein kann. Über diesen Modulator kann die Ladestation dem Fahrzeug abrechnungsrelevante Daten wie Quittungsdatensätze, Stromlieferant, Rabatte etc. übermitteln, die fahrzeugseitig entweder zur Anzeige gebracht oder gespeichert werden können. Hierfür hat das Fahrzeug einen mit der komplementären Induktionseinrichtung verbundenen Demodulator, der ebenfalls mit dem fahrzeugseitigen Modulator in einem Gerät integriert sein kann.

Vorzugsweise ist die Induktionseinrichtung als wenigstens eine Induktionsspule mit im wesentlichen vertikal erstreckender Spulenachse ausgebildet ist. Eine derartige Induktionsspule ist bei entsprechender Dimensionierung in der Lage, die benötigten hohen Ströme auf das Fahrzeug zu übertragen. Zudem kann die Spule zerstörungssicher in ein Schutzbett am Boden oder in einer am Boden festgelegten oder bewegbar gehaltenen Platte eingebettet, z.B. eingegossen werden, wodurch eine Beschädigung der Induktionsspule z.B. durch überfahrende Fahrzeuge ausgeschlossen wird.

Wie bereits zum Ausdruck gebracht, kann durch entsprechende Dimensionierung der Induktionsspule der Ladestation als auch des Fahrzeugs ein ausreichender Ladestrom sichergestellt werden. So die durch die Induktionsspule(n) der Ladestation aufgespannte Fläche mindestens 1/4 m², vorzugsweise mindestens 1/2 m² betragen. Die Größe der Induktionsspule des Fahrzeugs sollte entsprechend dimensioniert sein. Durch die große Fläche können die Feldstärken des Magnetfeldes für den Ladestrom reduziert werden. Dies reduziert die Feldbelastung des Fahrzeugs, was weniger Fehlerströme und eine geringere Belastung der Fahrzeugelektronik mit sich bringt.

In der Ladestation ist vorzugsweise ein Detektor für ein in die Ladestation einfahrendes Fahrzeug vorgesehen. Dieser Detektor kann jede Art von Detektor, z.B. Induktionssensor oder optischer Sensor sein. Es kann auch die Induktionseinrichtung der Ladestation zur Übertragung des Ladestroms für diese Aufgabe verwendet werden. Wenn durch den Detektor ein einfahrendes Fahrzeug detektiert wird, wird eine Einfahrhilfe eingeschaltet, die der einfahrenden Person, z.B. mit optischen und/oder akustischen Anzeigen, z.B. Pfeildarstellungen und Abstandsmarkierungen anzeigt, wie das Fahrzeug rangiert werden muss, um eine optimale Stellung des Fahrzeugs mit Bezug auf die Induktionsspule der Ladestation zu ermöglichen. Die Ansteuerung der Einfahrhilfe erfolgt mittels der relativen Position des Detektors oder der Induktionseinrichtung der Ladestation relativ zu einer definierten Stelle am Fahrzeug, vorzugsweise zur fahrzeugseitigen komplementären Induktionseinrichtung. Auf diese Weise wird erreicht, dass die Induktionseinrichtung der Ladestation und die fahrzeugseitige komplementäre Induktionseinrichtung optimal angekoppelt sind, um einen hohen Ladestrom übertragen zu können.

Wenn die Induktionseinrichtung der Ladestation in einer bewegbaren Halteeinrichtung, z.B. Platte angeordnet ist, kann ein Stellmechanismus für die Halteeinrichtung vorgesehen sein, der von dem Signal des Detektors und oder der Stärke der Koppelung der Induktionseinrichtung mit der komplementären Induktionseinrichtung steuerbar ist, um so die Induktionseinrichtung der Ladestation möglichst nahe an die komplementäre Induktionseinrichtung des Fahrzeugs heranzuführen. Der Stellmechanismus kann zudem Abstandssensoren aufweisen, mit denen sichergestellt werden kann, dass die Induktionseinrichtung zwar möglichst nahe an die komplementäre Induktionseinrichtung herangeführt wird, andererseits aber das Fahrzeug durch die Halteeinrichtung nicht berührt wird. Auf diese Weise wird die Koppelung der Induktionseinrichtung mit der komplementären Induktionseinrichtung optimiert.

In dem erfindungsgemäßen System ist vorzugsweise eine Überwachungsvorrichtung vorgesehen, die mit einem zentralen Server verbunden ist, und den aktuellen Zustand der Komponenten des Systems erfasst und dem Server übermitteln kann. Die Überwachungsvorrichtung weist eine Vergleichsvorrichtung auf, um die aktuellen Statusdaten des Systems mit Referenzdaten zu vergleichen und daraus ein Fehlersignal zu Meldung an den Server abzuleiten. Auf diese Weise kann die Betriebssicherheit der Anlage sichergestellt und rechtzeitig vor dem Ausfall einer Komponente eine Wartung oder ein Austausch der Komponente veranlasst werden. Der Server kann über ein Fernverbindungsnetzwerk wie z.B. Internet oder einen Telekommunikationskanal mit dem Server verbunden sein.

Es handelt sich bei dem System um ein verzweigtes elektrisches Netz mit meist mehreren Ladestationen, in denen hohe Ströme gehandhabt werden.
Vorzugsweise verfügt daher die Überwachungsvorrichtung über eine Strommesseinrichtung für den Gesamtstrom des Systems und vorzugsweise auch für den Strom der Ladestation(en). Die Überwachungsvorrichtung kann hierdurch den Stromfluss zumindest in dem Gesamtsystem, und vorzugsweise auch in den den einzelnen Ladestationen zugeordneten Zweigen des Systems, d.h. des elektrischen Netzes messen und vergleichen. Hierdurch kann festgestellt werden, ob der gesamte Stromfluss in der Anlage mit dem aktuell abgerechneten Stromfluss übereinstimmt. Auf diese Weise können zum einen Fehlerströme detektiert werden und zum anderen kann man einer unberechtigten Stromentnahme entgegenwirken.

Diese Überwachung kann einfach durchgeführt werden, indem die Überwachungsvorrichtung eine Subtraktionseinheit aufweist, um einen Differenzwert zwischen dem Gesamtstrom des Systems und dem Stromdurchsatz in allen Ladestationen zu bilden, welcher Differenzwert der Vergleichsvorrichtung zum Vergleich mit einem zulässigen Grenzwert zugeführt wird. Mit dieser Schaltung wird der nicht abgerechnete Strom erfasst, wobei zum einen festgestellt werden kann, ob Fehlerströme vorliegen oder eine unerlaubte Stromentnahme vorliegt. Durch das entsprechende Fehlersignal, das ein einfaches binäres Signal sein kann, oder ein Signal, dass die Fehlerstromgröße anzeigt, kann dann eine weiter Aktion veranlasst werden, z.B. das Abschalten des Systems oder einzelner Ladestationen. Dies erfordert eine bidirektionale Datenleitung mit dem Server zur entsprechenden Ansteuerung der Steuerung mittels des Servers.

Die Überwachungseinrichtung erhält Informationen über die Ladeströme und kann so verifizieren, ob die Induktionseinrichtung einer Ladestation eventuell fehlerhaft ist.

Vorzugsweise ist die Ladestation weiterhin mit einer Adapterwechseleinrichtung ausgestattet, die aus einer vorgebbaren Menge von Adapterstücken für unterschiedliche Ladesysteme automatisch eine dem Elektrofahrzeug zugeordnete passende Adaptereinrichtung mit dem Stromzuführungskabel verbindet. Die Ladestation verfügt in einer vorteilhaften Weiterbildung der Erfindung über eine Vorzugsweise wird die Adapterwechselvorrichtung in Abhängigkeit von den Identifizierungsdaten, die über die erste Eingabevorrichtung eingegeben wurden, oder über den an dem Wahlschalter eingestellten Stromlieferungstyp automatisch betätigt, so dass sie den für das fragliche Beladungskonzept passenden Adapter mit dem Stromzuführungskabel der Ladestation verbindet.

Die Verbindungsadapter zum Verbinden des Stromlieferungskabels mit dem Kraftfahrzeug eigenen Beladungssystem sind damit vorzugsweise lösbar und austauschbar an dem Stromkabel angeschlossen. Als Verbindung kann ein herkömmliches Adaptersystem mit verschiedenen Verschlüssen, z.B. Bajonettverschluss verwendet werden, wobei maßgeblich ist, dass der Adapterwechsel nur durch die Adapterwechselvorrichtung selbst erfolgen kann. Somit ist eine Manipulation durch die Kunden ausgeschlossen.

Auf diese Weise wird nicht nur bewirkt, dass der Ladestrom in einer richtigen Impulsform zur Verfügung gestellt wird, sondern auch, dass der für das Elektrofahrzeug richtige Adapter zum Beladen des Fahrzeugs zur Verfügung gestellt wird.

Vorzugsweise sind wenigstens drei Ladestationen oder eine vielfache Anzahl davon vorgesehen. Auf diese Weise ist es möglich, alle drei Phasen des öffentlichen Stromnetzes gleichmäßig durch die Ladestationen zu belasten, selbst wenn die zu ladenden Fahrzeuge nur ein- oder zweiphasig angeschlossen sind. Vorzugsweise ist hierfür eine Elektronik vorgesehen, die den Stromfluss auf jeder Phase der Stromzuleitung in das System misst und automatisch die Phase mit dem Ladestrom belastet, auf welcher am wenigsten Strom fließt. Gleichzeitig wird der Verzerrungsgrad des Ladestroms kontinuierlich ermittelt und durch die Elektronik und weiteren aktiven Filterelementen auf einen maximal zulässigen Pegel reduziert.

Es ist selbstverständlich auch möglich, dass ein Kunde Strom bezieht, ohne dass die Abrechnung über ein Kundenkonto erfolgt. In diesem Fall stellt er über einen Wahlschalter ein, welches Elektrofahrzeug er hat, bzw. was für eine Stromimpulsform er benötigt und an einer zweiten Eingabevorrichtung wählt er den gewünschten Stromlieferanten. Optional kann hier eine hinterlegte Datenbank zu jeder Zeit sicherstellen, dass nur Stromlieferanten zugelassen werden, die im Moment des Betankungsvorgangs die dann geltenden Bestimmungen zur Verwendung regenerativer Energien erfüllen. Diese Datenbanken können zum Beispiel über eine Internetverbindung laufend oder regelmäßig aktualisiert werden.

Es ist optional möglich, über ein an der Ladestation vorgesehenes Display die aktuellen Stromkosten der einzelnen Stromlieferanten anzuzeigen, um dem Kunden die Wahl eines preisgünstigen oder vertrauten Stromlieferanten zu ermöglichen. Die Anzeigevorrichtung kann auch als Touch-Screen ausgebildet sein und somit gleichzeitig als zweite Eingabevorrichtung dienen.

In einer vorteilhaften Weiterbildung der Erfindung ist eine Ladestation in Verbindung mit einer Leuchte, z.B. einer Straßenbeleuchtung vorgesehen. Auf diese Weise wird sichergestellt, dass der Beladungsbereich ausreichend mit Helligkeit versorgt ist und zudem wird eine günstige Kopplung zwischen Straßenbeleuchtung und Stromladefunktion realisiert.

Die Leuchte kann auch über einen Infrarotsensor ansteuerbar sein, so dass die Leuchte eingeschaltet wird, wenn sich ein Gegenstand, z.B. ein Fahrzeug in den Bereich des Infrarotsensors bewegt. Im Leerlauf kann dann vorzugsweise ein Solarzellenpaneel vorgesehen sein, um die Energie für die Tätigkeit des Infrarotsensors und die Startenergie, die zum Hochfahren des Systems, z.B. die Betätigung eines Relais, notwendig ist, sicherzustellen.

Der Schutz gegen elektrische Gefährdungen wird vorzugsweise durch galvanische Trennung des öffentlichen Netzes von der Ladestation mittels eines Trenntransformators mit Isolationsüberwachung vorzugsweise mittels der Überwachungsvorrichtung gewährleistet. Dies erlaubt bei einem Erstfehler mit Erdkontakt im Gesamtsystem die Fortführung des Betriebs, bei gleichzeitiger Störmeldung an eine verantwortliche Betriebsstelle. Von hier aus ist nach Fehlerprüfung z.B. eine Fernabschaltung manuell möglich. Bei Eintreten eines Zweitfehlers erfolgt eine sofortige Abschaltung aller Vorgänge, mit der Möglichkeit der manuellen oder automatischen Wiedereinschaltung nach Fehlerklärung.

Optional kann der Schutz gegen elektrische Gefährdung auch durch die vorgesehene vollständige elektronische Überwachung aller Leiter dargestellt werden. Hierzu werden sämtliche Abweichungen zu den schutzrelevanten Sollwerten kontinuierlich geprüft und durch Gegensteuern der Elektronik des Phasenmanagements innerhalb eines unkritischen Toleranzbandes gehalten. Erst die unausweichliche Überschreitung der zulässigen Grenzwerte führt dann zur sofortigen Abschaltung. Erst nach Fehlerklärung kann dann die Wiedereinschaltung automatisch oder manuell erfolgen.

Die Erfindung wird nachfolgend beispielsweise anhand der schematischen Zeichnung beschrieben. In dieser zeigen:
- Fig. 1: eine Vorderansicht einer erfindungsgemäßen Ladestation,
- Fig. 2: ein System mit sechs Ladestationen und zentraler Stromwandlereinrichtung und Steue- rung, und
- Fig. 3: einen Ausschnitt aus dem System mit einer Ladestation und einem Fahrzeug.

Eine Ladestation 10 für Elektrofahrzeuge umfasst eine auf einem Standfuß 12 gehaltene Säule 14 an welcher ein Stromzuführungskabel 16, eine Adapterwechseleinrichtung 18, ein Kartenleser 20, eine Eingabetastatur 22 und ein Touchscreen 24 angeordnet sind. Weiterhin verfügt die Säule über einen Belegdrucker 21. Am oberen Ende der Säule 14 sind zwei Lampen 26 angeordnet, welche optional über einen Infrarotsensor 28 betätigbar sind, welcher den Bereich vor der Säule 14 abscannt. Die Tätigkeit des Infrarotsensors und die Betätigung eines Startrelais zum Einschalten der Ladestation 10 kann durch eine Photovoltaikanlage 38 am oberen Ende der Säule bereitgestellt werden. Es ist für die Realisierung der Erfindung auch möglich, die Ladestation nur mit einer oder zwei der Eingabevorrichtungen 20, 22, 23, 24 zu versehen. Zudem sind die Leuchten 26 und der Infrarot-Sensor als auch die Photovoltaikanlage 38 jeweils optionale Komponenten und für die Erfindung nicht unbedingt notwendig.

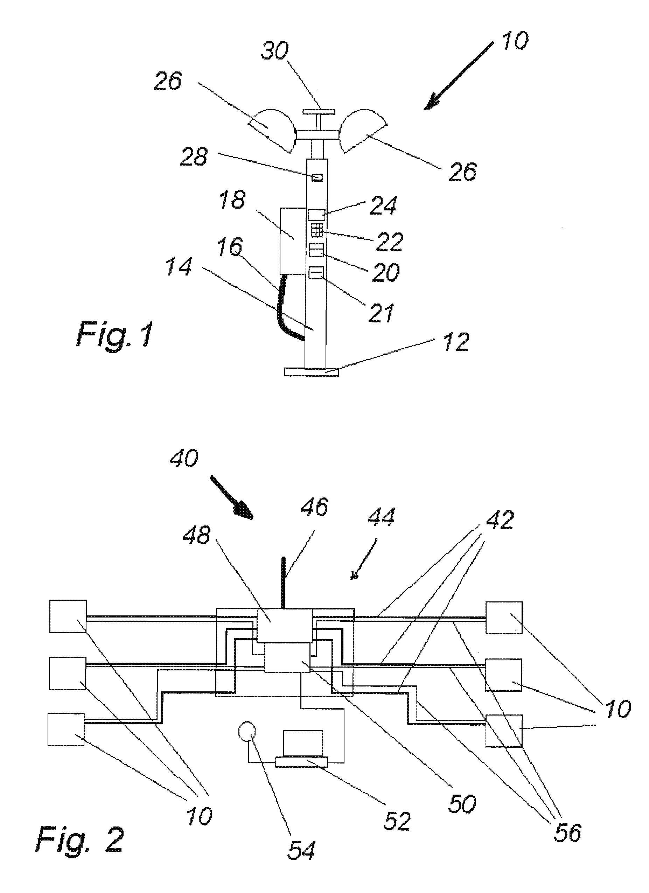

Ein Ladevorgang an einer derartigen Ladestation 10 findet wie folgt statt:
Über den Kartenleser 20 werden die Kundendaten bzw. eine Identifizierung des Endkunden eingelesen, welche Daten mit zentralen Daten verglichen werden, die durch unterschiedliche Energieversorger bereitgestellt werden. Durch Vergleich bzw. aufgrund des Vergleichsergebnisses wird das Elektrofahrzeug des Kunden identifiziert und die Stromwandlereinrichtung 48 (Figur 2) entsprechend angesteuert, damit der Strom in der für das fragliche Elektrofahrzeug passenden Impulsform bereitgestellt wird. Zudem wird die Adapterwechselvorrichtung 18 dazu veranlasst, selbsttätig den passenden Anschlussadapter mit dem Stromzuführungskabel 16 zu verbinden, so dass eine korrekte Beladung des Elektrofahrzeugs erfolgen kann. Falls gewünscht, kann über die zweite Eingabevorrichtung 22 in Form der Eingabetastatur und/oder über den Touchscreen 24 auch ein anderer Stromlieferant gewählt werden, der optional auf dem Display 24 angezeigt wird. Die Tastatur 22 kann auch durch den Touchscreen 24 ersetzt werden. Der Touchscreen kann auch als reines Anzeigedisplay 24 ohne Eingabefunktion ausgebildet sein..

Fig. 2 zeigt ein System 40 mit sechs Ladestationen 10, die über Stromkabel 42, insbesondere Starkstromkabel, mit einer zentralen Steuereinheit 44 verbunden sind. Die zentrale Steuerung ist über einen Stromanschluss 46 mit den drei Phasen des öffentlichen Stromnetzes verbunden. Die zentrale Steuereinheit 44 enthält des Weiteren eine Stromwandlereinrichtung 48 als auch eine elektronische Steuerung 50 zur Ansteuerung der Stromwandlereinrichtung 48 und zur Handhabung der Identifikationskunden und Kontodaten. Die Handhabung der Identifikationskunden- und Kontodaten kann jedoch auch auf einer separaten Steuerung erfolgen. Die zentrale elektronische Steuerung 50 ist mit einem Ein-/Ausgabeterminal 52 verbunden, welches wiederum mit einer Datenaustauschstation 54, z.B. Internet oder einem Funknetz oder irgendeinem lokalen Netzwerk verbunden ist. Die Verbindung mit der Datenaustauschstation 54 kann jedoch auch an jeder beliebigen anderen Stelle erfolgen. Die Ladestationen 10 sind darüber hinaus mittels elektronischer Steuerleitungen 56 mit der zentralen Steuereinheit 44 verbunden. Die Starkstromanschlüsse 42 der Ladestationen 10 sind mit der Stromwandlereinrichtung 48 verbunden, wohingegen die elektronischen Steuerleitungen 56 mit der zentralen elektronischen Steuerung 50 der zentralen Steuereinheit 44 verbunden sind. Auf diese Weise erfolgt der Datenverkehr zwischen den Ladestationen 10 und der zentralen Steuereinheit 44 mittels der elektronischen Steuerungsleitung 56, wohingegen der Starkstrom zum Betanken der Elektrofahrzeuge über die Starkstromleitung 42 erfolgt. Diese Trennung ist vorteilhaft, um Interferenzen zwischen den Steuersignalen und dem vergleichsweise hohen Ladestrom, üblicherweise in der Größe etlicher zig oder hundert Ampere, der auch impulsförmig sein kann, zu verhindern. In der Stromwandlereinrichtung 48 oder damit verbunden ist eine Messvorrichtung (nicht dargestellt) vorgesehen, die den Strom auf allen drei Phasen der Stromzuleitung 46 misst, wonach die elektronische Steuerung 50 den Stromwandler 48 der Ladestation 10 für den nächsten Beladungsvorgang mit derjenigen Phase zu verbinden, auf welcher am wenigsten Strom fließt. Auf diese Weise wird eine möglichst gleichmäßige Belastung aller drei Phasen des öffentlichen Stromnetzes sichergestellt.

Die Konto- und Stromlieferdaten werden entweder in einem Speicher der elektronischen Steuerung 50 gespeichert und in Abständen über die Verbindung 54 an eine zentrale Abrechnungsinstitution übersandt oder direkt nach dem Buchungsvorgang über die Verbindung 54 an eine zentrale Verrechnungsinstitution weitergeleitet. Das Ein- und Ausgabeterminal 52 dient der Bedienperson des Systems dazu, die aktuellen Strom- und Kontotransaktionen des Systems zu überwachen und zu bestätigen. Überdies kann das Terminal dazu benutzt werden, die technische Funktion des Stromwandlers als auch der elektronischen Steuerung 50 zu überwachen. Die Verbindung 54 mit einem externen Netzwerk kann auch dazu verwendet werden, eine Fernüberwachung aller Komponenten der zentralen Steuereinheit 44 als auch der elektronischen Komponenten in den Ladestationen vorzunehmen. Die elektronischen Steuerleitungen 56 zwischen den Ladestationen 10 und der zentralen Steuereinheit 44 sind hierfür vorzugsweise für den bidirektionalen Datentransport vorgesehen. Die zentrale Steuereinheit 44 überwacht damit sowohl die Bereitstellung des richtigen Beladungsstroms und die Verbindung mit dem richtigen Adapter, als auch die Kontoabwicklung inklusive Drucken des Belegs an der Ladestation 10 über den Belegdrucker 21 oder an einer zentralen Kasse.

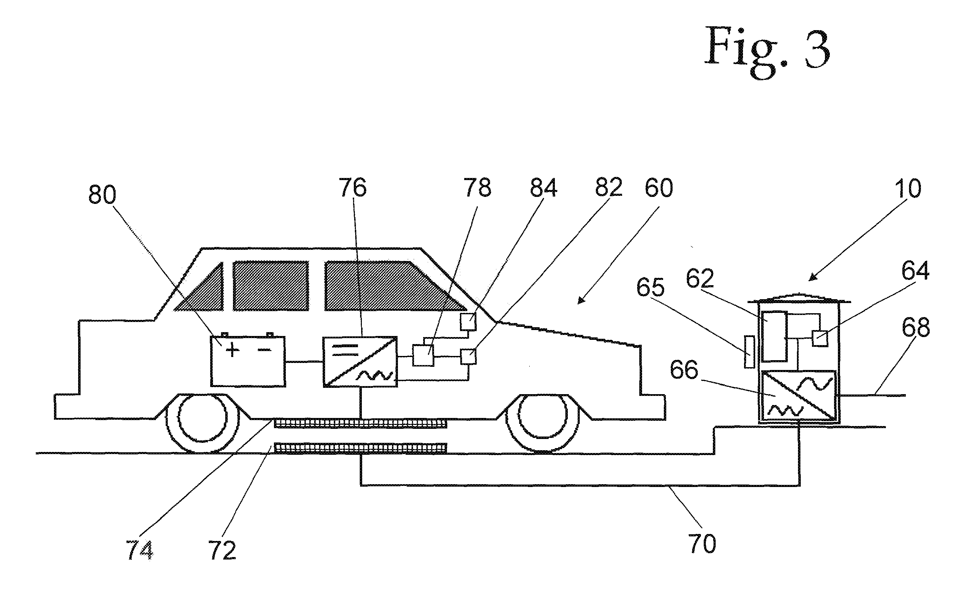

Fig. 3 zeigt sehr schematisch eine Ladestation 10 des Systems und ein Fahrzeug 60. Die Ladestation 10 hat eine eigene Steuerung 62 , einen mit der Steuerung 62 verbundenen Modulator-Demodulator 64, eine große Anzeigeeinrichtung 65 für eine Einparkhilfe und einen Frequenzwandler 66. Der Frequenzwandler 66 ist über die Leitung 68 mit der Netzversorgungsspannung verbunden und über die Stromzuführung 70 mit der Induktionseinrichtung 72 in Form einer großen Induktionsspule.

Das Fahrzeug 60 hat eine zur Induktionsspule 72 der Ladestation 10 komplementäre Induktionsspule 74, die mit einem gesteuerten Gleichrichter 76 verbunden ist, welcher wiederum mit einem Steuereingang mit der fahrzeugseitigen Steuerung 78 und einer Batterie 80 des Fahrzeugs verbunden ist. Die fahrzeugseitige Steuerung 78 ist mit einem Modulator-Demodulator 82 verbunden, der wiederum direkt oder über die Steuerung 78 mit dem steuerbaren Gleichrichter 76 erbunden ist.

Die Anordnung arbeitet wie folgt:
Über die Induktionsspule 72 wird seitens der Ladestation die Annäherung eines Fahrzeugs erkannt. Entweder durch definierte Detektionspunkte am Fahrzeug in Verbindung mit separaten Detektoren der Ladestation 10 oder über die relative Lage der Induktionseinrichtung 72 und der komplementären Induktionseinrichtung 74 wird über die Steuerung 65 der Ladestation ein Anzeigepanel angesteuert, welches den Fahrer mit Pfeilen oder farbigen Anzeigen eine Rangierhilfe bereitstellt, so dass eine optimale Position der beiden Induktionseinrichtungen 72, 74 relativ zueinander erzielt wird.

Ist die optimale Parkposition erricht, gibt die fahrzeugseitige Steuerung 78 über den Gleichrichter 76 ein Identifikationssignal ab, welches ID-Daten aus einem fahrzeugseitigen Speicher abruft. Dieser Speicher kann ein fester Speicher, z.B. EEPROM oder ein Wechselspeicher sein, z.B. eine Karte oder ein ID-Code im Fahrzeugschlüssel.

Über die Induktionseinrichtungen 72, 74 werden die ID-Daten dem Frequenzwandler 66 zugeführt, von wo sie mittels des Modulator-Demodulators 64 abgegriffen und der Steuerung zugeführt werden. Der Modulator-Demodulator 64 kann integraler Bestandteil der Steuerung 62 sein. Die Steuerung 62 leitet die Daten an die zentrale Steuereinheit 44 (Fig. 2) weiter falls es sich um eine Anlage mit mehreren Ladestationen handelt. Falls es sich um eine Einzelstation handelt, werden die Daten entweder in der Steuerung 62 oder in einem entfernten zentralen Server, der z.B. über eine Kommunikationsverbindung wie Telekommunikationsleitung oder Internet, mit der Steuerung verbunden ist, mit abgespeicherten Daten verglichen und in Abhängigkeit von dem Vergleichsergebnis wird der Frequenzwandler 66 freigeschaltet, so dass er den vom öffentlichen Stromnetz über die Leitung 68 bezogenen Strom in einen für das Fahrzeug geeignetes Stromsignal umwandelt und der Induktionseinrichtung 72 zuführt.

Nach Abschluss der Ladung kann der Fahrzeughalter über die Induktionseinrichutngen einen Quittungsdatensatz erhalten, den der Fahrzeughalter später auf einer eigenen DV-Anlage ausdrucken und abspeichern kann. Zusätzlich kann die Ladestation einen (nicht dargestellten) Drucker zum Ausdrucken eine Belegs enthalten.

Falls der Fahrzeughalter aktiv die Parameter für den Ladevorgang auswählen möchte kann er über eine fahrzeugseitige Eingabe/Ausgabeeinheit 84 die an der Ladestation verfügbaren Stromanbieter für den Ladevorgang auswählen. Die Kommunikation erfolgt dabei bidirektional über die Induktionseinrichtungen 72, 74 und die Modulatoren-Demodulatoren 64, 82 der Ladestation und des Fahrzeugs 60.

## Patentansprüche

1. System zum Aufladen von Elektrofahrzeugen (60), umfassend wenigstens eine Ladestation (10) mit einer Stromwandlereinrichtung (48), die Strom aus dem öffentlichen Netz in einen für das fragliche Elektrofahrzeug passenden Gleich- oder Wechselstrom passender Größe konvertiert, welche Stromwandlereinrichtung mit einer Steuerung (50) oder einem zentralen Server verbunden ist, welche(r) Informationen von einer Eingabevorrichtung (20, 22, 23, 24) erhält,
welche(r) Steuerung/Server eine Vergleichseinrichtung aufweist zum Vergleichen der über die Eingabeeinrichtung eingelesenen Identifizierungsdaten mit in einem Speicher und/oder Server abgelegten Daten, dass in Abhängigkeit von dem durch die Vergleichseinrichtung ermittelten Vergleichsergebnis die Ladestation freigebbar und die Stromwandlereinrichtung steuerbar ist,

2. System nach Anspruch 1, **dadurch gekennzeichnet, dass** die Ladestation (10) eine zweite Eingabevorrichtung (22) hat, mittels der ein Stromanbieter für den Bezug des Ladestroms eingebbar ist, und dass in Abhängigkeit von den über die zweite Eingabevorrichtung eingegebenen Anbieterdaten ein dem Ladestrom entsprechender Wert in einem anbieterspezifischen Speicherbereich der Steuerung/des Servers abgelegt wird, die/der separate Speicherbereiche für unterschiedliche Anbieter aufweist.

3. System nach Anspruch 1 oder 2, **dadurch gekennzeichnet, dass** in Verbindung mit der Ladestation eine Induktionseinrichtung (72) vorgesehen ist, die mit einer komplementären Induktionseinrichtung (74) an dem Fahrzeug (60) zur Übertragung des Ladestroms zusammenwirkt.

4. System nach Anspruch 3, **dadurch gekennzeichnet, dass** die Induktionseinrichtung und die komplementäre Induktionseinrichtung zur bidirektionalen Datenübertragung ausgebildet sind, dass das Fahrzeug (60) einen Speicher für Identifikationsdaten und einen Modulator-Demodulator (82) aufweist, um der komplementären Induktionseinrichtung ein die Identifikationsdaten enthaltendes Datensignal zuzuführen, und dass die Ladestation (10) einen Modulator-Demodulator (64) zum Ausfiltern des Datensignals aus dem mittels der Induktionseinrichtung von der komplementären Induktionseinrichtung erhaltenen Signals enthält, welcher Modulator-Demodulator die Eingabevorrichtung für die Identifikationsdaten bildet.

5. System nach Anspruch 3 oder 4, **dadurch gekennzeichnet, dass** die Induktionseinrichtung als wenigstens eine Induktionsspule (72) mit im wesentlichen vertikal erstreckender Spulenachse ausgebildet ist.

6. System nach Anspruch 5, **dadurch gekennzeichnet, dass** die durch die Induktionsspule(n) (72) aufgespannte Fläche mindestens 0,2 m², insbesondere mehr als 0,5 m² beträgt.

7. System nach einem der vorhergehenden Ansprüche, **dadurch gekennzeichnet, dass** in der Ladestation ein Detektor für ein in die Ladestation einfahrendes Fahrzeug vorgesehen ist oder die Induktionseinrichtung (72) als Detektor geschaltet ist.

8. System nach Anspruch 7, **dadurch gekennzeichnet, dass** eine durch den Detektor (72) ansteuerbare Einfahrhilfe vorgesehen ist, die optische und/oder akustische Anzeigen (65) aufweist.

9. System nach Anspruch 8, **dadurch gekennzeichnet, dass** die Ansteuerung der Einfahrhilfe mittels der relativen Position des Detektors oder der Induktionseinrichtung (72) der Ladestation relativ zu einer definierten Stelle am Fahrzeug, vorzugsweise zu der fahrzeugseitigen komplementären Induktionseinrichtung (74), erfolgt.

10. System nach einem der Ansprüche 3 bis 9, **dadurch gekennzeichnet, dass** die Induktionseinrichtung der Ladestation in einer bewegbaren Halteeinrichtung, z.B. Platte angeordnet ist,

11. System nach Anspruch 10, **dadurch gekennzeichnet, dass** ein Stellmechanismus für die Halteeinrichtung vorgesehen ist, der von dem Signal des Detektors und oder der Stärke der Koppelung der Induktionseinrichtung mit der komplementären Induktionseinrichtung steuerbar ist.

12. System nach Anspruch 11, **dadurch gekennzeichnet, dass** der Stellmechanismus Abstandssensoren aufweist.

13. System nach einem der vorhergehenden Ansprüche, **dadurch gekennzeichnet, dass** eine Überwachungsvorrichtung vorgesehen ist, die mit einem zentralen Server verbunden ist, und den aktuellen Status von Komponenten des Systems erfasst, welche Überwachungsvorrichtung eine Vergleichsvorrichtung aufweist, um die aktuellen Statusdaten mit Referenzdaten zu vergleichen und daraus ein Fehlersignal für den Server abzuleiten.

14. System nach Anspruch 13, **dadurch gekennzeichnet, dass** die Überwachungsvorrichtung über Strommesseinrichtungen den Gesamtstrom des Systems und den Strom der Ladestation(en) erfasst.

15. System nach einem der vorhergehenden Ansprüche, umfassend mehrere Ladestationen (10)
**dadurch gekennzeichnet, dass** eine zentrale Stromversorgung (46) für alle Ladestationen (10) vorgesehen ist, dass in der zentralen Stromversorgung eine Messvorrichtung für den auf den einzelnen Phasen der Zuleitung des öffentlichen Stromnetzes fließenden Strom vorgesehen ist,
und dass die Steuerung (50) eine Schaltung aufweist, die die für den nächsten Ladevorgang benutzte Stromwandlereinrichtung (48) mit der Phase verbindet, auf der der geringste Strom bzw. zumindest nicht der maximale Strom fließt.

16. System nach einem der vorhergehenden Ansprüche, **dadurch gekennzeichnet, dass** die zweite Eingabevorrichtung (22) an der Ladestation (10) oder in einem Fahrzeug (60) ausgebildet ist, und dass die Stromwandlereinrichtung (48) in Abhängigkeit von dem Signal der zweiten Eingabevorrichtung steuerbar ist.

17. System nach einem der vorhergehenden Ansprüche, **gekennzeichnet durch** eine in einem oberen Teil der Ladestation (10) vorgesehene Straßenleuchte. (26).
